Europäisches Patentamt

European Patent Office

Office européen des brevets

(11) Publication number: **0 172 344**
A2

# (12) EUROPEAN PATENT APPLICATION

(21) Application number: **85107333.8**

(22) Date of filing: **13.06.85**

(51) Int. Cl.⁴: **G 06 F 1/00**

(30) Priority: **22.08.84 JP 173434/84**

(43) Date of publication of application:
**26.02.86 Bulletin 86/9**

(84) Designated Contracting States:
**DE FR GB NL**

(71) Applicant: **Nippon Data General Corporation
6-12-20, Jingumae
Shibuya-ku Tokyo(JP)**

(72) Inventor: **Katayama, Hideji
8-4, Ichiriyama-cho
Gyoda-shi Saitama-ken(JP)**

(72) Inventor: **Iijima, Etsuo
1350-1, Ooazaokabe Okabe-machi
Oosato-gun Saitama-ken(JP)**

(72) Inventor: **Nakazawa, Masao
1-4-37, Nagano
Gyoda-shi Saitama-ken(JP)**

(72) Inventor: **Ide, Tomoyuki
12-27, Asahi-cho
Gyoda-shi Saitama-ken(JP)**

(74) Representative: **Eitle, Werner, Dipl.-Ing. et al,
Hoffmann, Eitle & Partner Patentanwälte Arabellastrasse
4
D-8000 München 81(DE)**

(54) Power saving system.

(57) A power saving system according to the present invention in a computer having at least one of a central processing unit (CPU) (1), MODEMs (29, 37), a floating point processor (13) and a floppy disk unit (23) has a common power supply circuit (59), a power control port (41) connected to the CPU (11), and a switch circuit (43) connected to the common power supply circuit (59) and the power control port (41) a power-off control signal for turning-off the unit which is designated to be turned off to the switch circuitry (43). The switch circuitry (43) receives the control signal and turns off the corresponding switch to pass the power supply from the common power supply circuit (59) to the designated unit.

./...

F I G. 1

- 1 -

Power saving system

The present invention relates to a power saving system used in a hand-held computer or the like.

Recent developments in microcomputers are rapid. Along with this, extensive studies on hand-held computers have been made.

Among these hand-held computers, some have a central processing unit (CPU) for performing arithmetic and logic operations of data, a main memory for storing data and instructions, a direct memory access controller (DMAC) for directly transferring data between the main memory and the I/O devices at high speed without going through the CPU, a keyboard unit for entering data, a keyboard controller for controlling the keyboard unit, a micro floppy disk unit used as an external storage device, a micro floppy disk controller for controlling the micro floppy disk unit, a communication controller for communicating with another computer, a display unit for displaying data, and so on.

A hand-held computer of this type is generally driven by batteries. Therefore, it is desirable that the computer comprises low-power CMOS devices so as to achieve long-term service.

However, the conventional micro floppy disk controller which controls the micro floppy disk unit and which is built into the hand-held computer does not comprise CMOS devices but NMOS devices. As NMOS devices have high power consumption, this results in inconvenience. In addition, an EIA standard RS232C/RS422 modem is used in the conventional hand-held computer and generally consumes a power of about 1 W. As is known, the floppy disk unit uses a motor which has high power consumption. Another hand-held computer which has a floating point processor (FPP) has also been proposed. However, this hand-held computer also comprises NMOS devices, resulting in high power consumption. Thus demand has arisen for a method of cutting off power from power-wasting devices when they are not being used, thereby saving power.

It is an object of the present invention to provide a power saving system capable of controlling power such that devices which do not need to be kept on while not in use are switched off as needed.

To achieve the above object, there is provided a power saving system in a computer having at least one of a central processing element for performing data processing and generating a control signal, communicating means for causing said central processing element to communicate with another data processing apparatus, and high-speed operating means for operating data from said central processing element at a high speed, comprising:

a common power supply;

control signal generating means for generating a control signal so as to control supply of power to at least one of external storage means, said communicating means and said high-speed operating means in accordance with the control signal from said central processing element; and

means, connected to at least one of said common power supply, said control signal generating means, said external storage means, said communicating means and said high-speed operating means, for interrupting the supply of power to at least one of said external storage means, said communicating means and said high-speed operating means in accordance with the control signal from said control signal generating means.

According to the present invention, there is provided a power control circuit for designating a device to be kept off by a user command or an operating system and for interrupting the supply of power to the designated device, thereby preventing excessive power consumption. Therefore, power can be effectively used to drive the hand-held computer system for a long period of time.

A more complete understanding of the advantages, structure and operation of the present invention may be had by referring to the following detailed description when taken in conjunction with the accompanying drawings, in which:

Fig. 1 is a block diagram showing the overall configuration of a hand-held computer to which a power saving system according to the present invention is applied;

Fig. 2 is a block diagram showing power control signals generated from a power control port shown in Fig. 1;

Fig. 3 is a block diagram showing I/O signals of both the common power supply circuit and the switch circuit network shown in Fig. 1;

Fig. 4 is a circuit diagram showing first, second and third switch circuits of Fig. 3;

Fig. 5 is a circuit diagram showing a fourth switch circuit of Fig. 3;

Fig. 6 is a circuit diagram showing a fifth switch circuit of Fig. 3; and

Fig. 7 is a circuit diagram showing a switch circuit for controlling power supply to a floating point processor of Fig. 1.

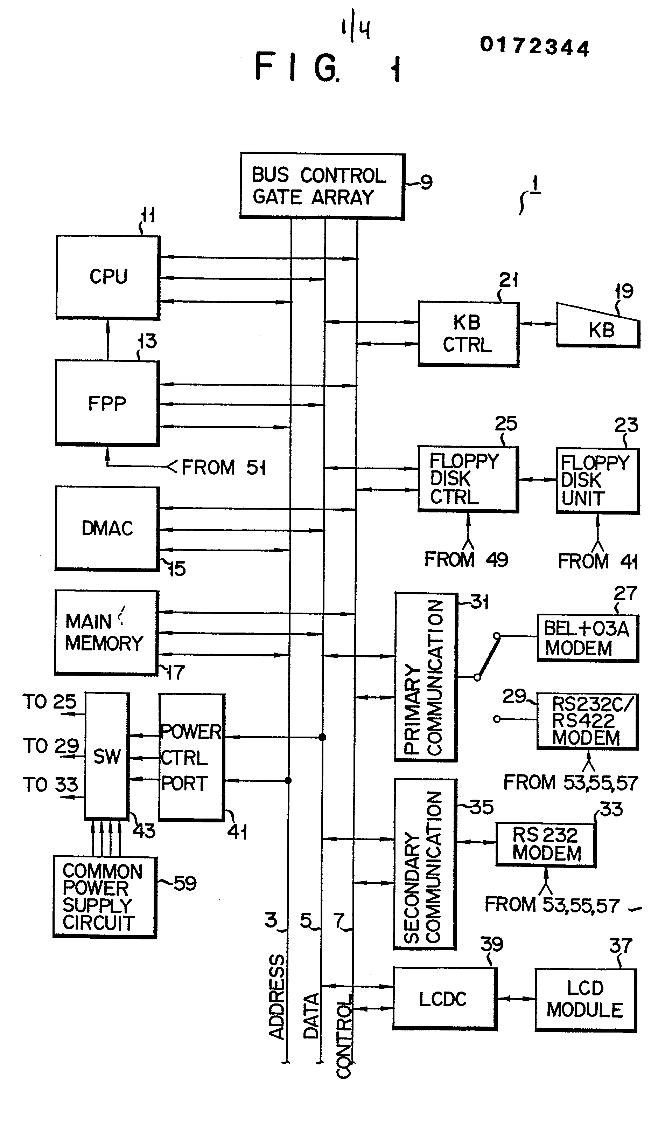

A power saving system according to an embodiment of the present invention will be described with reference to Figs. 1 to 7.

Fig. 1 is a block diagram showing the overall configuration of a hand-held computer 1 to which the power saving system of the present invention is applied. The hand-held computer 1 has an address bus 3 for transferring an operand address and an I/O device address, a data bus 5 for transferring various I/O data, and a control bus 7 for transferring a control signal between a central processing unit (CPU) 11 and the peripheral devices. The buses 3, 5 and 7 are connected to and controlled by a bus control gate array circuit 9. The CPU 11 communicates with the I/O devices connected to the buses 3, 5 and 7. The CPU 11 comprises, for example, a 16-bit CMOS CPU 80C88 available from Intel Corp. (U.S.A.). An NMOS floating point processor (FPP) 13 is connected to the CPU 11 and the buses 3, 5 and 7 and performs decimal point operation at high speed. A direct memory access controller (DMAC) 15 performs high-speed data transfer from an input device to a main memory 17 or from the main memory to an output device without going through the CPU 11. In addition, the buses 3, 5 and 7 are connected to a keyboard controller 21 for controlling a keyboard 19 and to an NMOS micro floppy disk unit controller 25 for controlling a micro floppy disk unit 23.

The buses 3, 5 and 7 are also connected to a primary communication controller 31 for controlling a first direct coupling modem 27 of Bel +03 A type which can be directly coupled to a telephone set and for controlling a second direct coupling modem 29 of RS232C/RS422 standard, and a secondary communication controller 35 for controlling a third modem 33 of RS232 standard, and a liquid crystal display controller (LCDC) 39 for controlling a liquid crystal display module (LCD) 37.

A power control port 41 controls the supply of power to the FPP 13, the micro floppy disk unit controller 25, the second direct coupling modem 29, and the third modem 33. More particularly, the power control port 41 causes a switch circuit network 43 to turn off in accordance with an instruction from the CPU 11, thereby cutting off power from the devices. As shown in Fig. 2, power control port 41 generates power control signals EIA-B-ON and EIA-A-ON for supplying power to the second and third modems 29 and 33, a power control signal FDC-ON for supplying power to the micro floppy disk controller 25, a power control signal NPP-ON for supplying power to the FPP 13, and power control signals MTRON1 and MTRON0 for supplying power to the motor of the micro floppy disk unit 23.

The signals EIA-B-ON and EIA-A-ON are supplied to a NOR gate 45 which then generates a signal EIA-PWRON. The output signal from the NOR gate 45 is supplied to an inverter 47 which then generates a signal $\overline{\text{EIA-PWRON}}$. The power control port 41 comprises, for example, an 82C55A available from Intel Corp. (U.S.A.).

The signals MTRON1 and MTRON0 are supplied to the motor of the micro floppy disk unit 23, so that power supplied to the unit 23 is controlled. The signals EIA-PWRON, $\overline{\text{EIA-PWRON}}$, FDC-ON and NOP-ON are supplied to the switch circuit network 43 so as to control the ON/OFF operations of the respective switch circuits. The ON/OFF control of the switch circuits will now be described.

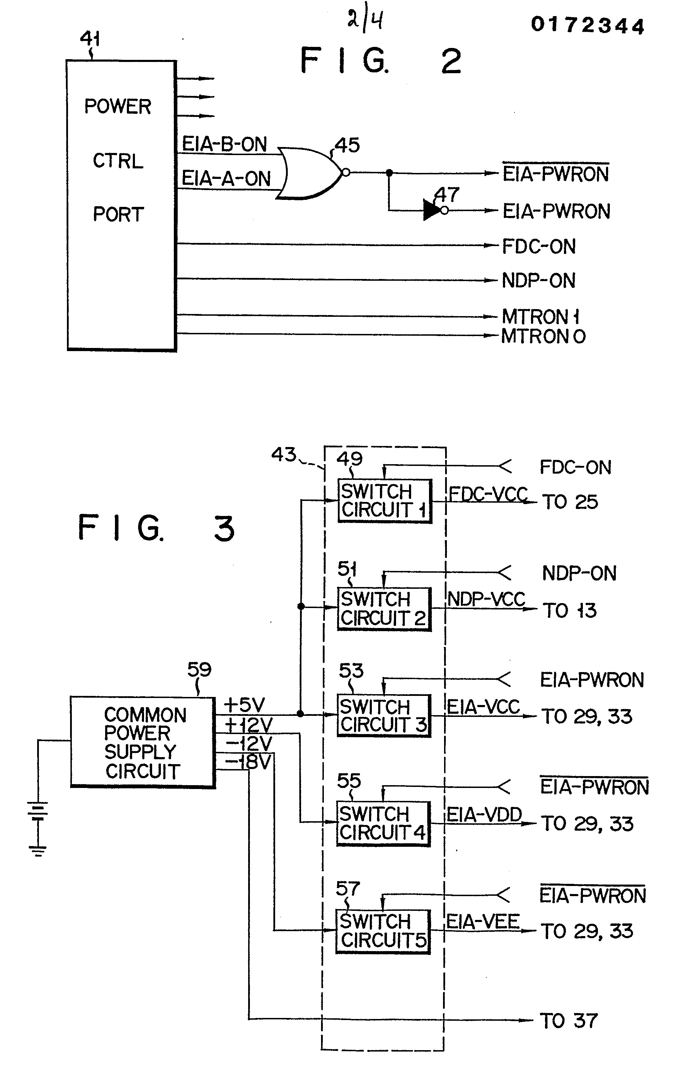

Fig. 3 is a detailed block diagram showing the switch circuit network 43 of Fig. 1. According to this embodiment, the switch circuit network 43 comprises five switch circuits 49, 51, 53, 55 and 57.

The switch circuits 49, 51, 53, 55 and 57 are commonly connected to a common power supply circuit 59. A voltage of +5 V is applied to the switch circuits 49, 51 and 53. A voltage of +12 V is applied to the switch circuit 55. A voltage of -12 V is applied to the switch circuit 57. The signal FDC-ON from the power control port 41 of Fig. 2 is supplied to the first switch circuit 49. The power control signal NDP-ON from the power control port 41 is supplied through the second switch circuit 51 to the FPP 13. The generation of the NDP-ON signal will be described later. The power supply control signal EIA-PWRON for controlling the second and third modems 29 and 33 is supplied from the power control port 41 to the third switch circuit 53. The EIA-PWRON signal is supplied to the fourth and fifth switch circuits 55 and 57. These switch circuits 49, 51, 53, 55 and 57 are turned on when the corresponding control signals comprise significant data and the voltage signal from the common power supply circuit 59 is then supplied to the predetermined devices.

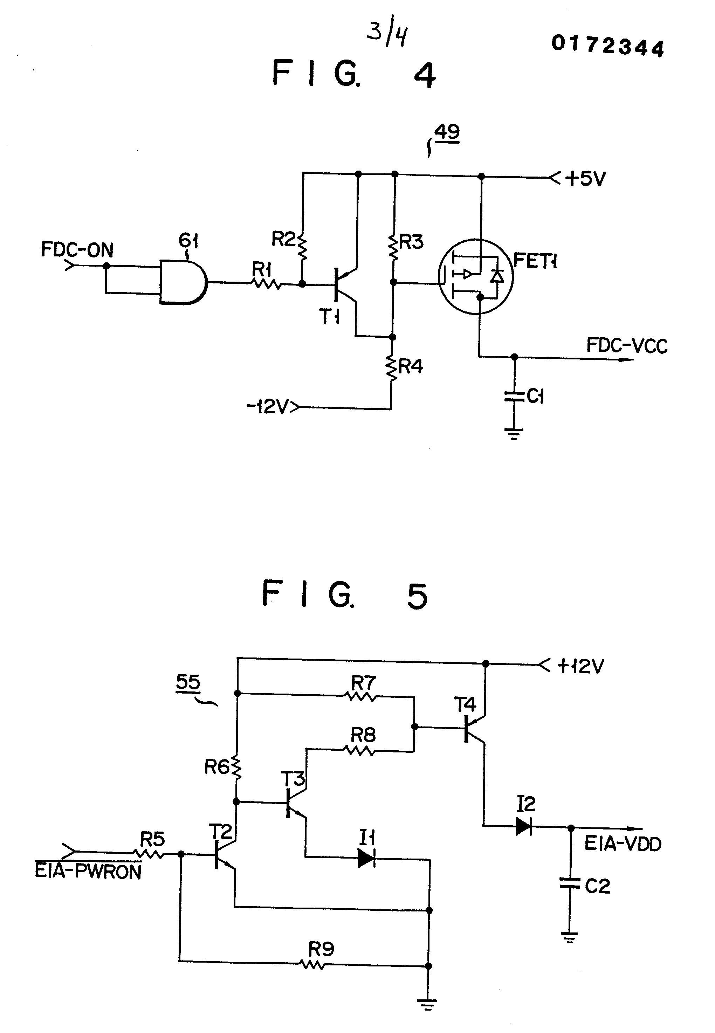

Fig. 4 is a circuit diagram showing the first switch circuit 49. Referring to Fig. 4, the FDC-ON signal of significant data is supplied to the base of a transistor T1 through an AND gate 61 and a resistor R1. The transistor T1 is turned on, and a current then flows from the +5 V power supply through the transistor T1 and a resistor R4. The voltage generated across the resistor R4 causes an FET 1 to turn on, and the current from the +5 V power supply flows in a capacitor C1 through the FET 1. Therefore, the capacitor C1 is charged at +5 V and a signal FDC-VCC of +5 V is supplied to the micro floppy disk controller 25.

The switch circuits 51 and 53 have the same configuration as that of the switch circuit 49, except that different power supply signals are supplied thereto. The signal NDP-ON passing through the switch circuit 51 is supplied to the FPP 13 and the signal EIA-PWRON passing through the switch circuit 53 is supplied to the second and third modems 29 and 33.

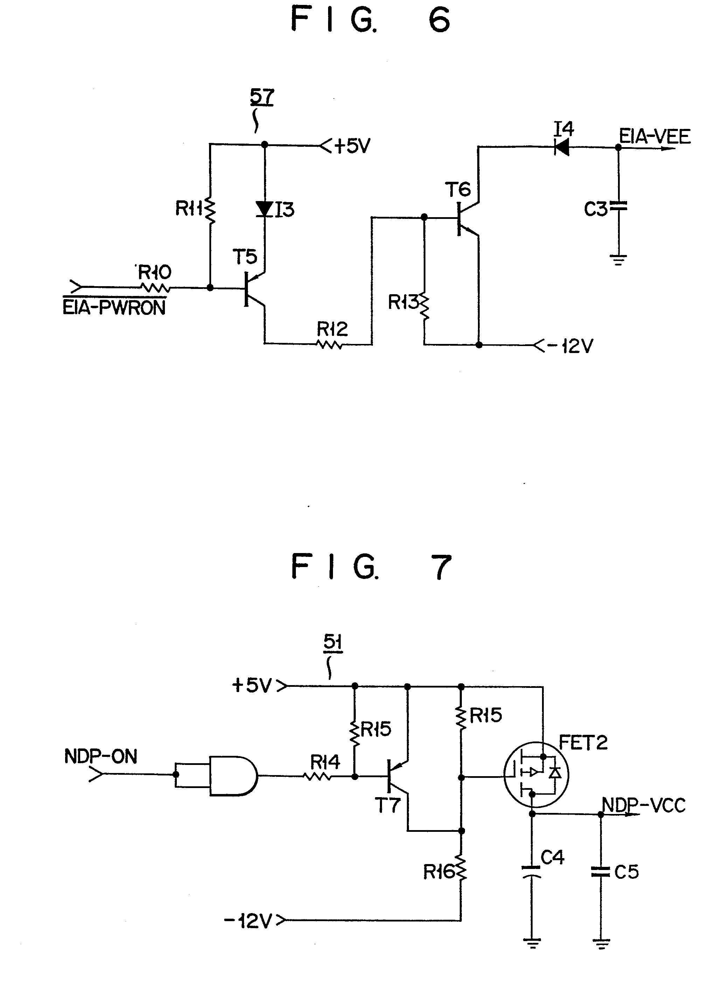

Fig. 5 is a circuit diagram showing the switch circuit 55. Referring to Figs. 5, when the EIA-PWRON signal of significant data is supplied to a transistor T2 through a resistor R5, the transistor T2 is turned off. The voltage dropped by a resistor R6 is then supplied to the base of a transistor T3. Therefore, the transistor T3 is turned on, and a current from the +12 V power supply flows through a path of resistors R7 and R8, the transistor T3 and an inverter I1. As a result, the voltage dropped by the resistor R7 causes a transistor T4 to be turned on, and the current from the +12 V power supply flows through a path of the transistor T4, an inverter I2 and a capacitor C2. Therefore, the capacitor C2 is charged at +12 V so as to supply the EIA-VDD signal of +12 V. The obtained signal EIA-VDD is thus supplied to the second and third modems 29 and 33.

Fig. 6 is a circuit diagram showing the switch circuit 57. Referring to Fig. 6, when the signal EIA-PWRON of significant data is supplied to a transistor T5 through a resistor R10, the transistor T5 is turned on and a current from the +5 V power supply then flows through a path of an inverter I3, the transistor T5 and a resistor R12. As a result, the voltage dropped across the resistor R12 is applied to the base of a transistor T6, and the transistor T6 is turned on. Therefore, a capacitor C3 is charged at -12 V so as to supply a signal EIA-VEE of -12 V to the second and third modems 29 and 33.

Fig. 7 is a circuit diagram showing the switch circuit 51. Referring to Fig. 7, the power control signal NDP-ON of significant data generated from a keyboard control port 63 is supplied to a resistor R14 through an AND gate 65, so that the voltage generated across the resistor R14 causes a transistor T7 to be turned on. As a result, the current from the +5 V power supply flows in a capacitor C4 through an FET 2 and the capacitor C4 is thus charged at +5 V. Therefore, a power supply signal NDP-VCC of +5 V is supplied to the FPP 13 shown in Fig. 1.

Among these control signals supplied from the CPU 11 to the power control port 41, the power supply control signals supplied from the CPU 11 to the micro floppy disk unit 23, the micro floppy disk controller 25, the second modem 29 and the third modem 33 are controlled in accordance with the operating system program. On the other hand, the power supply control signal supplied from the floating point processor 13 is entered by a user command such as an I/O command.

While the present power saving system has been described in reference to a particular embodiment, and as being used to a certain computer, it is to be understood that further modifications, alterations, and manipulations may be made and practiced by those having ordinary skill in the art without departing from the spirit and scope of the present invention.

Claims:

1.   A power saving system in a computer having at least one of a central processing element (11) for performing data processing and generating a control signal, communicating means (29, 37) for causing said central processing element to communicate with another data processing apparatus, high-speed operating means (13) for operating data from said central processing element at a high speed, and an external storage means (25, 23) comprising:

a common power supply (59);

control signal generating means (41, 11) for generating a control signal so as to control supply of power to at least one of said external storage means (25, 23), said communicating means (29, 37) and said high-speed operating means (13) in accordance with the control signal from said central processing element (11); and

means (43), connected to at least one of said common power supply (59), said control signal generating means (41), said external storage means (25, 23), said communicating means (29, 37) and said high-speed operating means (13), for interrupting the supply of power to at least one of said external storage means (25, 23), said communicating means (29, 37) and said high-speed operating means (13) in accordance with the control signal from said control signal generating means.

2.   A power saving system according to claim 1, characterized in that said control signal generating means (41) comprises:

a central processing element (11) for executing an instruction representing which one of said external storage means (25, 23) said communicating means (29, 37) and said high-speed operating means (13) is subjected to power control, and for generating predetermined control data; and

a power control port (41) for generating predetermined binary power control data in accordance with the predetermined control data from said central processing element.

3.  A power saving system according to claim 2, characterized in that said means (43) for interrupting the supply of power comprises switching circuits (49, 51, 53, 55, 57) each of which comprises transistors, said switch circuits being turned on/off in response to the binary power control data from said power control port (41).

ᴄᴌ

ᴇ·ᴅ·

FIG. 1
1/4
0172344

# F I G. 2

- 41 POWER CTRL PORT
  - POWER
  - EIA-B-ON
  - EIA-A-ON → 45 → $\overline{\text{EIA-PWRON}}$
  - 47 → EIA-PWRON
  - FDC-ON
  - NDP-ON
  - MTRON 1
  - MTRON 0

# F I G. 3

- 43
- 49 SWITCH CIRCUIT 1 — FDC-ON — FDC-VCC → TO 25
- 51 SWITCH CIRCUIT 2 — NDP-ON — NDP-VCC → TO 13
- 53 SWITCH CIRCUIT 3 — EIA-PWRON — EIA-VCC → TO 29, 33
- 55 SWITCH CIRCUIT 4 — $\overline{\text{EIA-PWRON}}$ — EIA-VDD → TO 29, 33
- 57 SWITCH CIRCUIT 5 — $\overline{\text{EIA-PWRON}}$ — EIA-VEE → TO 29, 33
- 59 COMMON POWER SUPPLY CIRCUIT
  - +5V
  - +12V
  - −12V
  - −18V
- TO 37

# F I G. 4

FDC-ON

61

R1

R2

R3

FET1

T1

R4

−12V

+5V

49

FDC-VCC

C1

# F I G. 5

55

R5

EIA-PWRON

T2

R6

R7

R8

T3

T4

I1

I2

EIA-VDD

C2

R9

+12V

4/4

0172344

F I G. 6

F I G. 7